# EUROPEAN PATENT SPECIFICATION

(11) **EP 3 103 719 B1**
(45) Date of publication and mention of the grant of the patent: **05.06.2019**
(21) Application number: 16173789.5
(22) Date of filing: 09.06.2016
(51) Int. Cl.: B64D 13/02, B60T 8/17, B64D 37/32

(54) **FUEL TANK INERTING APPARATUS FOR AIRCRAFT**
KRAFTSTOFFTANKINERTISIERUNGSVORRICHTUNG FÜR EIN FLUGZEUG
APPAREIL D'INERTAGE DE RÉSERVOIR DE CARBURANT POUR AÉRONEF

(30) Priority: 09.06.2015 US 201514734051
(43) Date of publication of application: 14.12.2016
(73) Proprietor: Hamilton Sundstrand Corporation, Windsor Locks, CT 06096-1010 (US)
(72) Inventor: BRUNO, Louis J., Ellington, CT 06029 (US); MILLOT, Christina W., Wilbraham, MA 01095 (US); HIPSKY, Harold W., Willington, CT 06279 (US)
(74) Representative: Dehns

(56) References cited:
- EP-A1- 0 629 548
- EP-A1- 1 099 628
- EP-A1- 1 445 428
- EP-A1- 1 586 504
- EP-A1- 2 871 349
- US-A1- 2005 223 895
- US-A1- 2005 247 197

## Description

### BACKGROUND OF THE INVENTION

The subject matter disclosed herein generally relates to fuel tank inerting apparatuses for aircraft and, more particularly, to fuel tank inerting apparatus and processes configured to supply inert gas in an aircraft.

In general, in air conditioning systems of aircraft, cabin pressurization and cooling is powered by engine bleed pressures at cruise altitudes. For example, pressurized air from an engine of the aircraft is provided to a cabin through a series of systems that alter the temperatures and pressures of the pressurized air. To power this preparation of the pressurized air, generally the source of energy is the pressure of the air itself. As a result, traditional air conditioning systems require relatively high pressures at cruise altitudes, that is, the ambient air must be compressed. The relatively high pressures required in current system provide limited efficiency with respect to engine fuel burn.

The air bled from engines may be used for environmental control systems, such as used to supply air to the cabin and to other systems within an aircraft. Additionally, the air bled from engines may be supplied to inerting apparatuses to provide inert gas to a fuel tank. In most cases, the air must be conditioned, e.g., altered in temperature and/or pressure, prior to being supplied to the desired location. The air to be supplied to an inerting apparatus may be desired to be at a higher pressure than the ambient air at altitude, e.g., at about 30 psig (207 kPa [Gauge]). Thus, the air must be compressed to the higher desired pressure, which requires energy and thus may impact the efficiency of the aircraft.

EP 1 445 428 A1 discloses a prior art system in accordance with the preamble of claim 1, and a prior art method in accordance with the preamble of claim 8. US 2005/0247197 A1 discloses a prior art method and apparatus for generating an inert gas on a vehicle.

### BRIEF DESCRIPTION OF THE INVENTION

According to a first aspect of the present invention, there is provided a system as set forth in claim 1.

According to a further aspect of the present invention, there is provided a method as set forth in claim 8.

Technical effects of embodiments of the invention include an efficient inerting apparatus supply system and process configured to efficiently operate regardless of the operational status of an aircraft. Further technical effects of various embodiments of the invention include driving a turbine with air from a cabin air supply source.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic illustration of an inerting apparatus air supply configuration in accordance with a first exemplary embodiment of the invention;
FIG. 2 is a schematic illustration of an inerting apparatus air supply configuration outside of the scope of the present invention;
FIG. 3 is a schematic illustration of an inerting apparatus air supply configuration outside of the scope of the present invention;
FIG. 4 is a process for supplying air to an inerting apparatus in accordance with an exemplary embodiment of the invention.

### DETAILED DESCRIPTION OF THE INVENTION

Air conditioning systems of aircraft may be configured to provide cabin pressurization and cooling at low engine bleed pressures while the aircraft is at cruise altitudes. Current air conditioning systems may be supplied with air pressure at cruise altitudes that is approximately 30 psig to 35 psig (207 kPa [Gauge] to 241 kPa [Gauge]) above cabin pressure. In traditional cabin air conditioning systems, high pressure air from either an engine or an APU may, for example, pass through a series of heat exchangers, an air cycle machine, and a high pressure water separator where the air is cooled and dehumidified. The cold dry air may then be used to cool the cabin, flight deck, and other airplane systems. The high pressure air may also be used for other systems, such as inerting apparatuses.

However, some cabin air conditioning systems may employ or operate with air that is only 5 psig (35 kPa [Gauge]) or lower above cabin pressure. That is, some systems may operate at pressures significantly lower than the 30 to 35 psig (207 kPa [Gauge] to 241 kPa [Gauge]) of prior systems. The lower pressures may create issues for other systems that operate using the same bleed air. For example, fuel tank inerting apparatuses may employ bleed air both for operation and as an air supply. However, fuel tank inerting apparatuses may require air at higher air pressures, e.g., approximately 30 psig (207 kPa [Gauge]), to operate properly. In such systems and configurations, additional pressurization of the air to be used in the inerting apparatus may be required.

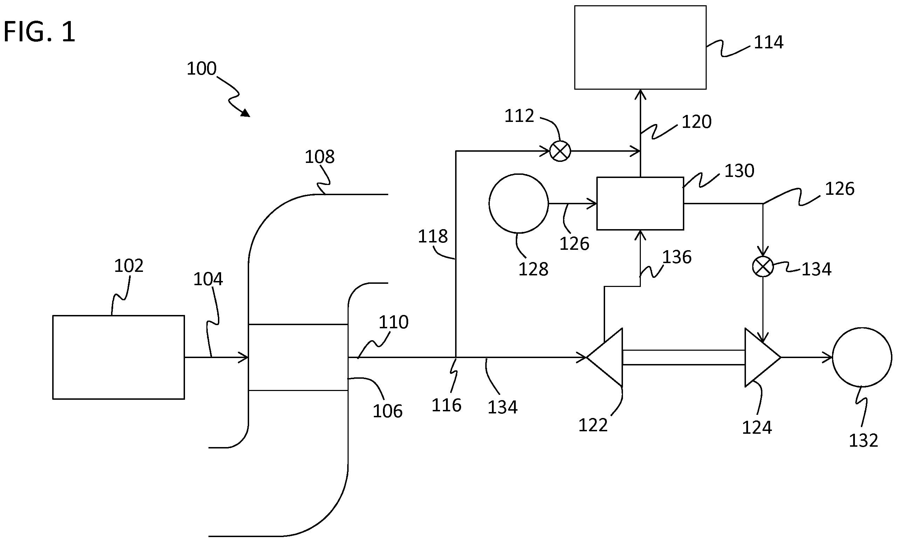

Turning to FIG. 1, a schematic illustration of an inerting apparatus supply configuration in accordance with a first exemplary embodiment of the invention is shown. In accordance with embodiments of the invention, a system for increasing the pressure of bleed air (at cruise) to a fuel tank inerting apparatus is provided. FIG. 1 illustrates a first exemplary embodiment.

As shown in FIG. 1, the system 100 includes a first air supply source 102, which may be an engine, an APU, a combination thereof, or other air supply source. The first air supply source 102 is configured to have air bled therefrom, which is supplied for environmental control systems, inerting apparatuses, etc. As shown, air may be bled along a fluid path 104 from the first air supply source 102 and passed into a heat exchanger 106, which may be a ram air circuit heat exchanger. The heat exchanger 106 is located within a duct 108 which enables a fluid within the duct 108 to thermally communicate with the air passing through the heat exchanger 106. The air may then enter a first flow path 110.

In system 100 of FIG. 1, the bleed air passes through the system 100 and is passed directly to an inerting apparatus 114 during certain operational conditions of the aircraft, e.g., during taxi, take-off, climb, and descent. During these operational conditions, a first valve 112 within the first flow path 110 will be open. With the first valve 112 open, air will flow toward an inerting apparatus 114 at a junction 116. The air will then pass along a part 118 of the first flow path 110, past the first valve 112, and into an exit flow path 120. As such, when the first valve 112 is open, the supply air from the first air supply source 102 passes directly to the inerting apparatus 114. That is, during these conditions (taxi, take-off, climb, descent) the air does not need additional conditioning as it is at a suitably high pressure for application by and/or within the inerting apparatus 114.

However, when an aircraft is cruising at cruise altitudes, additional compression may be required to be performed upon the air provided from the first air supply source 102. In the embodiment of FIG. 1, system 100 is configured to employ cabin discharge air to drive the fuel tank inerting apparatus during a cruising operational condition. That is, when it is desirable to employ reduced pressure bleed air for environmental control system applications, a compressor may be employed to provide the pressure to drive the fuel tank inerting apparatus, i.e., increase the pressure of the air supplied to the inerting apparatus 114.

In this approach, the bleed air from the first air supply source 102 is pressurized by a compressor 122 and supplied to the inerting apparatus 114. The compressor 122 is driven by a turbine 124 that is operationally connected to the compressor 122. The turbine 124 of the system 100 is driven by air from a second air supply source 128 and passes through a second flow path 126. That is, air is supplied from a second air supply source 128, flows into the second flow path 126, passes through a heat exchanger 130, and then drives the turbine 124. In this embodiment, the second air supply source 128 is the cabin and the air is cabin air. After driving the turbine 124, the cabin air is expelled or exhausted overboard at exhaust 132.

The heat exchanger 130 is configured to allow the air from the first air supply source 102 to be in thermal contact with the air from the second air supply source 128, thus conditioning the air that will be supplied to the inerting apparatus 114. For example, the heat exchanger 130 may be configured to maintain the air supplied to the inerting apparatus 114 at an appropriate temperature and/or to keep the discharge of the air from the turbine 124 above freezing.

The two sources of air 102, 128 are controlled, in part, by operation of one or more valves. As shown in FIG. 1, in addition to first valve 112, a second valve 134 is configured within the second flow path 126. The two valves 112, 134 are configured to jointly function to determine or control the path of the air supplied from the first air supply source 102. As noted, when the first valve 112 is open, air flows directly from the first air supply source 102 to the inerting apparatus 114. In contrast, when the first valve 112 is closed, air flows from the first air supply source 102 to the compressor 122, and then the heat exchanger 130, prior to being supplied to the inerting apparatus 114. With respect to the second valve 134, when the valve is closed, air does not pass from the second air supply source 128 to the turbine 124, but when open, second valve 134 allows for air flow to drive the turbine 124.

A first state of the system 100 is when the first valve 112 is open and the second valve 134 is closed. In this state, the air from the first air supply source 102 flows directly to the inerting apparatus 114. The first state is engaged when the air pressure is sufficiently high to not require further conditioning, such as during taxiing, take-off, ascent, descent, and landing.

In a second state, the first valve 112 is closed, and the air from the source 102 is directed at junction 116 along a part 134 of the first flow path 110 and into the compressor 122 where the air is compressed. The air then leaves the compressor 122 and flows along flow path 136. The compressed air the passes through the heat exchanger 130 and thermally communicates with the air from the second air supply source 128. The air then exits the heat exchanger 130 into the exit flow path 120 and is supplied to the inerting apparatus 114. Also in the second state, the second valve 134 is opened and air flows from the second air supply source 128, into the heat exchanger 130, drives the turbine 124, and then is exhausted at exhaust 132.

Advantageously, the above described embodiment of the invention employs an existing air supply source to drive a turbine which is used to compress and condition air to be supplied to an inerting apparatus even if the air is at a low pressure.

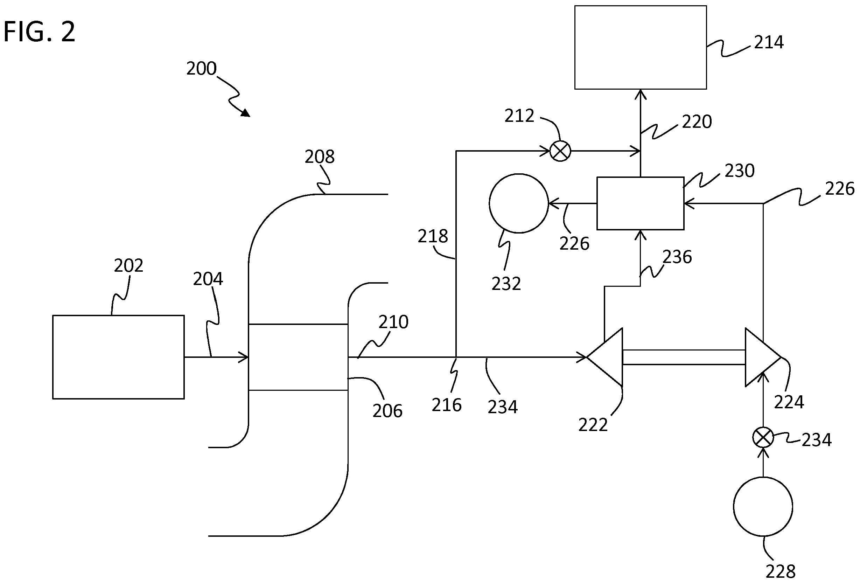

Turning now to FIG. 2, a schematic illustration of an inerting apparatus supply configuration, outside of the scope of the present invention, is shown. In this arrangement, system 200 includes substantially the same features as system 100 of FIG. 1, and thus like features are labeled with similar reference numbers, but are preceded by a "2" rather than a "1." Thus, for example, the first air supply source 202 of FIG. 2 is substantially similar to source 102 of FIG. 1. Similarly, a compressor 222 and a turbine 224 are similarly configured as shown and described with respect to system 100 of FIG. 1. The description of similar features will not be repeated herein.

The primary difference between system 200 of FIG. 2 and system 100 of FIG. 1 is that in FIG. 2 the airflow path of the air from the second air supply source 228 is substantially reversed. That is, when a second valve 234 is open (second state of system 200), the air flow from the second air supply source 228 is first into a turbine 224 to drive a compressor 222, such as described above, and then flows into a heat exchanger 230 where it thermally communicates with the air from the first air supply source 202 after that air has been compressed by compressor 222. The air from the second air supply source is then exhausted overboard at exhaust 232. In sum, the flow path of the air from the second air supply source 228 is changed, with the air driving the turbine 224 prior to entering the heat exchanger 230.

In system 200, similar to the embodiment of FIG. 1, a first valve 212 is open during a first state, such as during taxiing, take-off, climbing, and descending, and a second valve 234 is closed. However, when cruising is achieved, the valves 212, 234 switch and a second state is engaged. In the second state, the first valve 212 is closed and the second valve 234 is open. During the second state, with the second valve 234 open, air may flow from the second air supply source 228 and drive the turbine 224 and then pass through the heat exchanger 230. At the same time, the compressor 222 is operated by the turbine 224 and air from the first air supply source 202 is compressed and passed through the heat exchanger 230 to be supplied to the inerting apparatus 214.

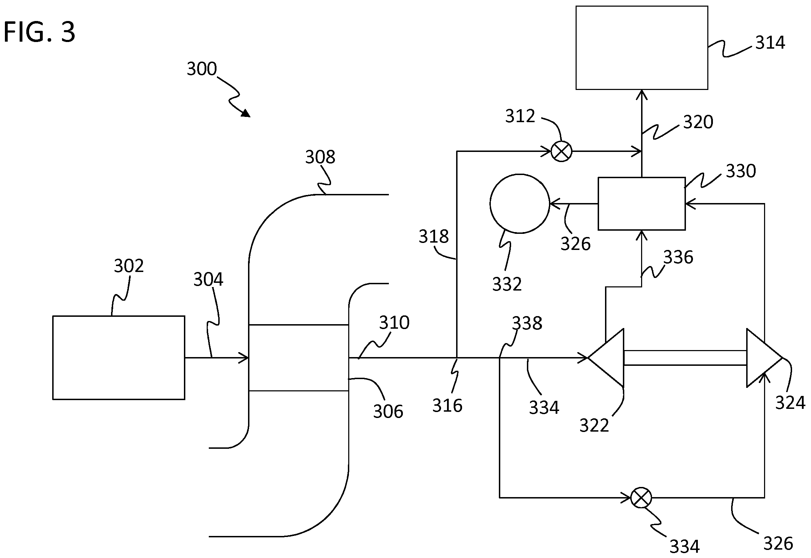

Turning now to FIG. 3, a schematic illustration of an inerting apparatus supply configuration, outside of the scope of the present invention, is shown. In this arrangement, system 300 includes substantially the same features as system 100 of FIG. 1, and thus like features are labeled with similar reference numbers, but are preceded by a "3" rather than a "1." Thus, for example, the first air supply source 302 of FIG. 3 is substantially similar to source 102 of FIG. 1. Similarly, a compressor 322 and a turbine 324 are similarly configured as shown and described with respect to system 100 of FIG. 1. The description of similar features will not be repeated herein.

The primary difference between system 100 of FIG 1 and system 300 of FIG. 3 is the source of the air used to drive the turbine 324 in system 300. In this embodiment, the first air supply source and the second air supply source are the same air supply source. In this embodiment, the air from first air supply source 302 is divided at a junction 338 upstream of the compressor 322. When second valve 334 is opened, a portion of the air from first air supply source 302 becomes the second air supply source as it flows along second flow path 326.

Thus, in operation, when in the first state and the first valve 312 is open, system 300 operates similar as described above for the first state. That is, in the first state, all of the air supplied by first air supply source 302 is directed to the inerting apparatus 314 without additional conditioning.

However, in the second state, the first valve 312 closes and the second valve 334 opens, allowing for the air in flow path 310 to be split at junction 338 with a portion flowing into second flow path 326 and becoming the second air supply source. The other portion of the air from the first air supply source continues along part 334 of first flow path 310 to flow toward the compressor 322. Thus, a portion of the air drives the turbine 324 to drive the compressor 322 to compress a different portion of the air. The air that drives the turbine 324 then may pass through a heat exchanger 330 and be exhausted overboard at exhaust 332. At the same time, the portion of air that is compressed by compressor 322 also passes through the heat exchanger 330 and is then supplied to the inerting apparatus.

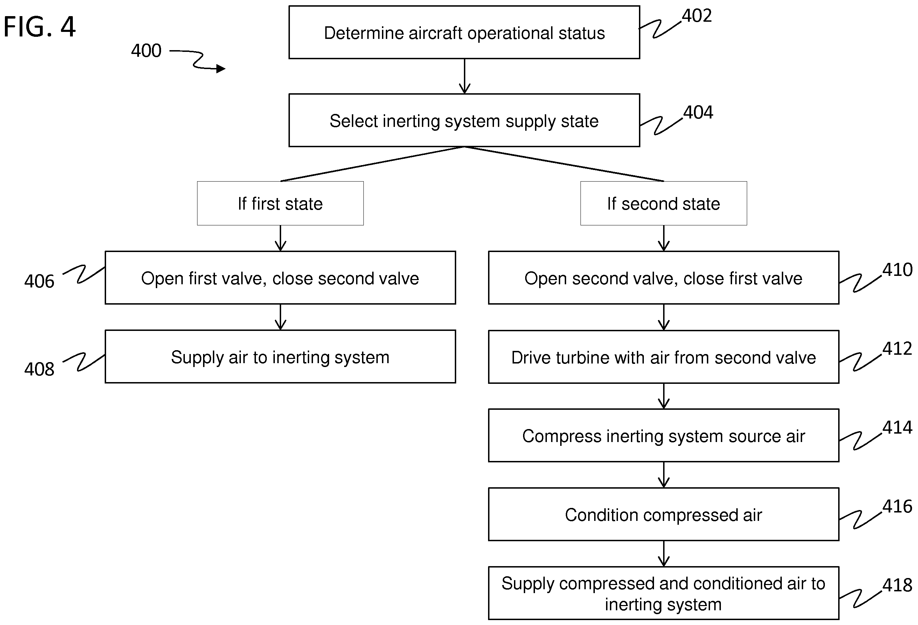

Turning now to FIG. 4, a process 400 in accordance with an exemplary embodiment of the invention is shown. The process 400 may be employed or used with any of the above described systems shown in FIGS. 1-3 or may be used in other systems, and thus the process 400 is not limited to the physical configurations show and described above. It should be appreciated by those of skill in the art that the process 400 is configured to provide appropriately conditioned air to an inerting apparatus, regardless of the current operating status of an aircraft. As such, the process 400 is configured to supply suitably conditioned air to the inerting apparatus when an aircraft is on the ground, such as when taxiing, during take-off, ascent, cruising, descent, and landing.

At step 402, an operating status of an aircraft is determined. That is, it is determined whether the aircraft is taxiing, in the process of take-off, climbing to altitude, at altitude and cruising, descending, landing, etc. This determination may be made by a controller, which may be in communication with flight controls. Alternatively, this determination may be made mechanically or otherwise based on the air pressure within an inerting apparatus air supply system. That is, the status of operation of the aircraft may inherently be determined by the air pressure within the system.

At step 404, an inerting apparatus supply state is selected or engaged. That is, if a controller is used, a decision may be made to operate in a first mode or a second state. If the system is mechanical, one of two valves may be opened while the other of the two valves may be closed, thereby automatically selecting or engaging an inerting apparatus supply state. The inerting apparatus supply state is a mode of operation of an air supply system that is configured to condition air, as necessary, for the purpose of supplying air to an inerting apparatus of an aircraft.

The first state is a state that is used when the aircraft is selected or engaged during taxi, take-off, climb, and descent. At step 406, if the first state is engaged at 404, a first valve is open or opened and a second valve is closed. The valve arrangement of the first state is configured to direct air flow directly from a source, such as an engine bleed port, an APU, etc., to the inerting apparatus, with minor conditioning, such as passing the air through a heat exchanger prior to entering the inerting apparatus at step 408.

The first state may be selected or engaged because the supply air may be at a sufficiently high pressure that it can be supplied directly to the inerting apparatus. As is known in the art, inerting apparatuses may require an air supply having an air pressure of about 30 psig (207 kPa [Gauge]). Thus, when in the first state, the air may already have a pressure sufficiently close to 30 psig (207 kPa [Gauge]) that only minimal conditioning is required.

However, if at step 404, the second state is selected or engaged, the second valve will be opened and the first valve will be closed at step 410. This occurs when a controller instructs the system to operate in the second state, such as when the aircraft is at altitude and the supply air has a much lower pressure. Because of this, the air must be compressed to a higher pressure prior to being supplied to an inerting apparatus. Thus, with the second valve opened at step 410, air may be directed to drive a turbine at step 412. The turbine may be operationally connected to a compressor and, at step 414, the air to be supplied to the inerting apparatus may be compressed by the compressor.

The compressed air is then passed through a heat exchanger at step 416 to adjust the temperature of the air after compression. The compressed air is then supplied to the inerting apparatus at step 418.

When there is a change in the operational status of the aircraft, the inerting apparatus supply state may be adjusted. For example the process 400 may be repeated, starting with step 402 to determine the operational status of the aircraft. This may be initiated by a controller or a change in the air pressure within the system which may change the state of the valves.

In view of the above, it will be appreciated by those of skill in the art that, in some embodiments, the first and second valves may be configured to be open and closed based on a pressure of the air that is upstream of the valve. For example, when the pressure is at or near a predetermined value, such as 30 psig (207 kPa [Gauge]), the first valve may be opened or in an open state, and the second valve may be closed. However, when the pressure drops below the predetermined value, the first valve may close and the second valve may open, thus driving the turbine and compressor to increase the pressure of the air to be supplied to the inerting apparatus. In other embodiments, the valves may be electronically controlled by a controller or other device, or may be electrically controlled by a switch or other device that is configured to change based on the air pressure within the inerting apparatus supply system or based on a flight status or other factor, such as altitude.

Advantageously, embodiments of the invention provide an air supply system for an inerting apparatus of an aircraft that is configured to supply air at an appropriate pressure while maintaining and/or improving efficiency of the aircraft. For example, in accordance with some embodiments, advantageously, cabin air may be used to condition air within the air supply system, both to change the pressure and the temperature of the air to be supplied to an inerting apparatus.

Advantageously, systems and processes in accordance with various embodiments of the invention may employ air and the associated air pressures from pre-existing systems to drive a turbine and compressor without the need to use other energy in the system, thus improving efficiency.

While the invention has been described in detail in connection with only a limited number of embodiments, it should be readily understood that the invention is not limited to such disclosed embodiments. Rather, the invention can be modified to incorporate any number of variations, alterations, substitutions, combinations, subcombinations, or equivalent arrangements not heretofore described, but which are commensurate with the scope of the invention. Additionally, while various embodiments of the invention have been described, it is to be understood that aspects of the invention may include only some of the described embodiments.

For example, although certain configurations are shown in FIGS. 1-3, those of skill in the art will appreciate that other configurations may be used without departing from the scope of the invention. For example, other sources of air may be used for either supplying air to an inerting apparatus and/or for supplying air to drive a turbine and compressor. Further, although there are valves and junctions indicated at certain locations within the system, those of skill in the art will appreciate that these locations are merely exemplary and other configurations may be used. Moreover, the order of components described herein, in terms of the flow line and direction of air flow through the system may be changed without departing from the scope of the invention. For example, the location of the heat exchangers, compressors, turbines, valves, etc. may be adjusted based on the specific systems and efficiencies therein.

Furthermore, although a single process is described herein, this process is merely illustrative, and the order of steps and any additional steps may be added or changed without departing from the scope of the invention. For example, in some embodiments, it may be possible to eliminate step 416 (using a heat exchanger on compressed air) without departing from the scope of the invention.

Accordingly, the invention is not to be seen as limited by the foregoing description, but is only limited by the scope of the appended claims.

## Claims

1. A system for supplying conditioned air to an inerting apparatus (114) of an aircraft, the system comprising:
an inerting apparatus (114); and
an air supply system (100) arranged to supply air to the inerting apparatus (114), the air supply system (100) comprising:
a first air supply source (102);
a first flow path (104) fluidly connecting the first air supply source (102) to an inerting apparatus (114);
a compressor device (122) driven by a turbine (124);
a second air supply source (128);
a second flow path (126) fluidly connecting the second air supply source (128) to the turbine (124) of the compressor device (122);
a first valve (112) located within the first flow path (104) and configured to be open in a first state and closed in a second state, the first valve (112) configured to allow a supply of air to flow from the first air supply source (102) to the inerting apparatus (114) directly;
a second valve (134) located within the second flow path (126) and configured to be closed in the first state and open in the second state, the second valve (134) configured to allow a supply of air to flow from the second air supply source (128) to drive the turbine of the compressor device; and
a heat exchanger (130) configured to condition the compressed air prior to being supplied to the inerting apparatus (114);
wherein, when in the second state, the compressor device (122) is operated to compress air from the first air supply source (102) prior to the air being supplied to the inerting apparatus (114);
**characterised in that**:
the heat exchanger (130) is upstream of the turbine (124) within the second flow path (126).

2. The system of claim 1, wherein the first air supply source (102) and the second air supply source (128) are the same air supply source.

3. The system of claim 1 or 2, wherein, when in the second state, air from the first supply source (102) and air from the second supply source (128) are configured to be in thermal communication in the heat exchanger (130).

4. The system of any of the preceding claims, wherein the first air supply source (102) is at least one of an engine and an APU.

5. The system of any of the preceding claims, wherein the second air supply (128) source is cabin air.

6. The system of any of the preceding claims, wherein the second flow path (126) is configured to exhaust the air from the second supply source (128) overboard after driving the turbine (124).

7. The system of any of the preceding claims, wherein the second state is engaged when the aircraft is at cruising altitude.

8. A method of supplying air to an inerting apparatus (114) of an aircraft, the method comprising:
determining an operational status of an aircraft;
engaging a first state of an inerting apparatus supply system (100) if the aircraft is in a first mode of operation, the first state configured to supply air from a first source (102) directly to an inerting apparatus (114);
engaging a second state of the inerting apparatus supply system (100) if the aircraft is in a second mode of operation, the second state configured to compress air from the first source (102) prior to being supplied to an inerting apparatus (114); and
supplying air from the first source (102) to the inerting apparatus (114), wherein
in the second state, the method further comprises supplying air in a second flow path (126) from a second source (128), driving a turbine (124) to compress the air from the first source (102) and conditioning the compressed air with a heat exchanger prior to supplying the compressed air to the inerting apparatus;
**characterised in that**:
the heat exchanger (130) is upstream of the turbine (124) within the second flow path (126).

9. The method of claim 8, wherein the first air supply source (102) and the second air supply source (128) are the same air supply source.

10. The method of claim 8 or 9, wherein the first air supply source (102) is at least one of an engine and an APU.

11. The method of any of claims 8 to 10, further comprising exhausting the air from the second supply source (128) overboard after driving the turbine (124).

## Patentansprüche

1. System zum Zuführen von klimatisierter Luft zu einer Inertisierungsvorrichtung (114) eines Flugzeugs, wobei das System Folgendes umfasst:
eine Inertisierungsvorrichtung (114); und
ein Luftzuführsystem (100), das angeordnet ist, der Inertisierungsvorrichtung (114) Luft zuzuführen, wobei das Luftzuführsystem (100) Folgendes umfasst:
eine erste Luftzuführquelle (102);
einen ersten Strömungspfad (104), der die erste Luftzuführquelle (102) mit einer Inertisierungsvorrichtung (114) fluidisch verbindet;
eine Kompressoreinheit (122), die durch eine Turbine (124) angetrieben wird;
eine zweite Luftzuführquelle (128);
einen zweiten Strömungspfad (126), der die zweite Luftzuführquelle (128) mit der Turbine (124) der Kompressoreinheit (122) fluidisch verbindet;
ein erstes Ventil (112), das sich innerhalb des ersten Strömungspfads (104) befindet und dazu konfiguriert ist, in einem ersten Zustand geöffnet und in einem zweiten Zustand geschlossen zu sein, wobei das erste Ventil (112) dazu konfiguriert ist, es einer Zufuhr von Luft zu erlauben, von der ersten Luftzuführquelle (102) direkt zu der Inertisierungsvorrichtung (114) zu strömen;
ein zweites Ventil (134), das sich innerhalb des zweiten Strömungspfads (126) befindet und dazu konfiguriert ist, in dem ersten Zustand geschlossen und in dem zweiten Zustand geöffnet zu sein, wobei das zweite Ventil (134) dazu konfiguriert ist, es einer Zufuhr von Luft zu erlauben, von der zweiten Luftzuführquelle (128) zu strömen, um die Turbine der Kompressoreinheit anzutreiben; und
einen Wärmetauscher (130), der dazu konfiguriert ist, die komprimierte Luft zu konditionieren, bevor sie der Inertisierungsvorrichtung (114) zugeführt wird;
wobei, wenn sie sich in dem zweiten Zustand befindet, die Kompressoreinheit (122) betrieben wird, um Luft von der ersten Luftzuführquelle (102) zu komprimieren, bevor die Luft der Inertisierungsvorrichtung (114) zugeführt wird;
**dadurch gekennzeichnet, dass**:
sich der Wärmetauscher (130) stromaufwärts der Turbine (124) innerhalb des zweiten Strömungspfads (126) befindet.

2. System nach Anspruch 1, wobei die erste Luftzuführquelle (102) und die zweite Luftzuführquelle (128) die gleiche Luftzuführquelle sind.

3. System nach Anspruch 1 oder 2, wobei, in dem zweiten Zustand, Luft von der ersten Zuführquelle (102) und Luft von der zweiten Zuführquelle (128) dazu konfiguriert sind, in thermischer Verbindung mit dem Wärmetauscher (130) zu stehen.

4. System nach einem der vorstehenden Ansprüche, wobei die erste Luftzuführquelle (102) mindestens eines eines Triebwerks und einer APU ist.

5. System nach einem der vorstehenden Ansprüche, wobei die zweite Luftzuführquelle (128) Kabinenluft ist.

6. System nach einem der vorstehenden Ansprüche, wobei der zweite Strömungspfad (126) dazu konfiguriert ist, die Luft von der zweiten Zuführquelle (128) über Bord abzugeben, nachdem sie die Turbine (124) angetrieben hat.

7. System nach einem der vorstehenden Ansprüche, wobei der zweite Zustand eingestellt ist, wenn sich das Flugzeug in Flughöhe befindet.

8. Verfahren zum Zuführen von Luft zu einer Inertisierungsvorrichtung (114) eines Flugzeugs, wobei das Verfahren Folgendes umfasst:
Bestimmen eines Betriebsstatus eines Flugzeugs;
Einstellen eines ersten Zustands eines Inertisierungsvorrichtungszuführsystems (100), falls sich das Flugzeug in einem ersten Betriebsmodus befindet, wobei der erste Zustand dazu konfiguriert ist, Luft von einer ersten Quelle (102) direkt zu einer Inertisierungsvorrichtung (114) zuzuführen;
Einstellen eines zweiten Zustands des Inertisierungsvorrichtungszuführsystems (100), falls sich das Flugzeug in einem zweiten Betriebsmodus befindet, wobei der zweite Zustand dazu konfiguriert ist, Luft von der ersten Quelle (102) zu komprimieren, bevor sie einer Inertisierungsvorrichtung (114) zugeführt wird; und
Zuführen von Luft von der ersten Quelle (102) zu der Inertisierungsvorrichtung (114), wobei, in dem zweiten Zustand, das Verfahren ferner das Zuführen von Luft in einen zweiten Strömungspfad (126) von einer zweiten Quelle (128),
der eine Turbine (124) antreibt, um die Luft von der ersten Quelle (102) zu komprimieren, und das Konditionieren der komprimierten Luft mit einem Wärmetauscher umfasst, bevor die komprimierte Luft der Inertisierungsvorrichtung zugeführt wird;
**dadurch gekennzeichnet, dass**:
sich der Wärmetauscher (130) stromaufwärts der Turbine (124) innerhalb des zweiten Strömungspfads (126) befindet.

9. Verfahren nach Anspruch 8, wobei die erste Luftzuführquelle (102) und die zweite Luftzuführquelle (128) die gleiche Luftzuführquelle sind.

10. Verfahren nach Anspruch 8 oder 9, wobei die erste Luftzuführquelle (102) mindestens eines eines Triebwerks und einer APU ist.

11. Verfahren nach einem der Ansprüche 8 bis 10, ferner das Abgeben der Luft von der zweiten Zuführquelle (128) über Bord umfassend, nachdem sie die Turbine (124) angetrieben hat.

## Revendications

1. Système destiné à fournir de l'air conditionné à un appareil d'inertage (114) d'un aéronef, le système comprenant :
un appareil d'inertage (114) ; et
un système d'alimentation en air (100) conçu pour fournir de l'air à l'appareil d'inertage (114), le système d'alimentation en air (100) comprenant :
une première source d'alimentation en air (102) ;
un premier trajet d'écoulement (104) reliant de manière fluidique la première source d'alimentation en air (102) à un appareil d'inertage (114) ;
un dispositif de compression (122) entraîné par une turbine (124) ;
une seconde source d'alimentation en air (128) ;
un second trajet d'écoulement (126) reliant de manière fluidique la seconde source d'alimentation en air (128) à la turbine (124) du dispositif de compression (122) ;
une première vanne (112) située à l'intérieur du premier trajet d'écoulement (104) et configurée pour être ouverte dans un premier état et fermée dans un second état, la première vanne (112) étant configurée pour permettre à une alimentation en air de s'écouler directement de la première source d'alimentation en air (102) à l'appareil d'inertage (114) ;
une seconde vanne (134) située à l'intérieur du second trajet d'écoulement (126) et configurée pour être fermée dans le premier état et ouverte dans le second état, la seconde vanne (134) étant configurée pour permettre à une alimentation en air de s'écouler à partir de la seconde source d'alimentation en air (128) pour entraîner la turbine du dispositif de compression ; et
un échangeur de chaleur (130) configuré pour conditionner l'air comprimé avant que l'air ne soit fourni à l'appareil d'inertage (114) ;
dans lequel, lorsqu'il se trouve dans le second état, le dispositif de compression (122) est utilisé pour comprimer l'air provenant de la première source d'alimentation en air (102) avant que l'air ne soit fourni à l'appareil d'inertage (114) ;
**caractérisé en ce que** :
l'échangeur de chaleur (130) est en amont de la turbine (124) à l'intérieur du second trajet d'écoulement (126).

2. Système selon la revendication 1, dans lequel la première source d'alimentation en air (102) et la seconde source d'alimentation en air (128) sont la même source d'alimentation en air.

3. Système selon la revendication 1 ou 2, dans lequel, lorsqu'il se trouve dans le second état, l'air provenant de la première source d'alimentation (102) et l'air provenant de la seconde source d'alimentation (128) sont configurés pour être en communication thermique dans l'échangeur de chaleur (130).

4. Système selon l'une quelconque des revendications précédentes, dans lequel la première source d'alimentation en air (102) est au moins un élément parmi un moteur et une APU.

5. Système selon l'une quelconque des revendications précédentes, dans lequel la seconde source d'alimentation en air (128) est un air de cabine.

6. Système selon l'une quelconque des revendications précédentes, dans lequel le second trajet d'écoulement (126) est configuré pour évacuer l'air provenant de la seconde source d'alimentation (128) par l'extérieur après l'entraînement de la turbine (124).

7. Système selon l'une quelconque des revendications précédentes, dans lequel le second état est engagé lorsque l'aéronef est à une altitude de croisière.

8. Procédé destiné à fournir de l'air à un appareil d'inertage (114) d'un aéronef, le procédé comprenant :
la détermination d'un statut opérationnel d'un aéronef ;
l'engagement d'un premier état d'un système d'alimentation d'un appareil d'inertage (100) si l'aéronef se trouve dans un premier mode de fonctionnement, le premier état étant configuré pour fournir de l'air provenant d'une première source (102) directement à un appareil d'inertage (114) ;
l'engagement d'un second état du système d'alimentation de l'appareil d'inertage (100) si l'aéronef se trouve dans un second mode de fonctionnement, le second état étant configuré pour comprimer l'air provenant de la première source (102) avant que l'air ne soit fourni à un appareil d'inertage (114) ; et
la fourniture d'air provenant de la première source (102) à l'appareil d'inertage (114), dans lequel dans le second état, le procédé comprend en outre la fourniture d'air dans un second trajet d'écoulement (126) provenant d'une seconde source (128),
l'entraînement d'une turbine (124) pour comprimer l'air provenant de la première source (102) et le conditionnement de l'air comprimé avec un échangeur de chaleur avant que l'air comprimé ne soit fourni à l'appareil d'inertage ;
**caractérisé en ce que** :
l'échangeur de chaleur (130) est en amont de la turbine (124) à l'intérieur du second trajet d'écoulement (126).

9. Procédé selon la revendication 8, dans lequel la première source d'alimentation en air (102) et la seconde source d'alimentation en air (128) sont la même source d'alimentation en air.

10. Procédé selon la revendication 8 ou 9, dans lequel la première source d'alimentation en air (102) est au moins un élément parmi un moteur et une APU.

11. Procédé selon l'une quelconque des revendications 8 à 10, comprenant en outre l'évacuation de l'air provenant de la seconde source d'alimentation (128) par l'extérieur après l'entraînement de la turbine (124).
